Europäisches Patentamt

European Patent Office

Office européen des brevets

(19)

(11) Veröffentlichungsnummer: **0 237 768 B1**

# (12) EUROPÄISCHE PATENTSCHRIFT

(45) Veröffentlichungstag der Patentschrift: **29.05.91**

(51) Int. Cl.⁵: **F16B 7/04**, F16B 5/06, F16B 12/40

(21) Anmeldenummer: **87101818.0**

(22) Anmeldetag: **10.02.87**

(54) **Vorrichtung zum räumlichen Verbinden von Teilen.**

(30) Priorität: **14.02.86 BG 73555/86**

(43) Veröffentlichungstag der Anmeldung:
**23.09.87 Patentblatt 87/39**

(45) Bekanntmachung des Hinweises auf die
Patenterteilung:
**29.05.91 Patentblatt 91/22**

(84) Benannte Vertragsstaaten:
**AT CH DE FR GB IT LI**

(56) Entgegenhaltungen:
**AU-B- 538 932**
**DE-A- 3 149 395**
**FR-A- 2 497 885**
**US-A- 2 942 898**

(73) Patentinhaber: **Pantev, Georgi Borissov,
Dipl.-Ing.**
**Komplex H. Dimiter, Bl. 10-2**
**Sofia(BG)**

(72) Erfinder: **Pantev, Georgi Borissov, Dipl.-Ing.**
**Komplex H. Dimiter, Bl. 10-2**
**Sofia(BG)**

(74) Vertreter: **Finck, Dieter et al**
**Patentanwälte v. Füner, Ebbinghaus, Finck**
**Mariahilfplatz 2 & 3**
**W-8000 München 90(DE)**

## Beschreibung

Die Erfindung betrifft eine Vorrichtung zum räumlichen Verbinden von Teilen, insbesondere Bauelementen, mit zwei Schalen, von denen jede mit wenigstens zwei Betten für die Aufnahme und Halterung der Teile versehen ist und die durch Verbindungselemente aneinander befestigt sind, wobei die Betten unter einem Winkel so angeordnet sind, daß sie sich räumlich kreuzen.

Aus der BG-A-72752 ist bereits eine Vorrichtung zum räumlichen Verbinden von zylindrischen Bauelementen bekannt, welche aus zwei in der Form gleichen Teilen besteht, welche durch Verbindungselemente aneinander befestigbar sind. Jedes der gleichgeformten Teile endet auf der einen Seite in einem Dübel und auf der anderen Seite in einer einstellbaren Öffnung. Im Mittelabschnitt eines jeden Teiles ist ein halbzylindrisches Bett vorgesehen.

Bei der bekannten Vorrichtung müssen die gleichgeformten Teile zueinander zentriert werden, was die Montage sehr aufwendig macht. Außerdem ist eine drehfeste Halterung der Bauelemente in der Vorrichtung nicht gewährleistet.

Eine Vorrichtung mit dem eingangs genannten gattungsgemäßen Aufbau ist aus der FR-A-2497 885 bekannt.

Die der Erfindung zugrundeliegende Aufgabe besteht deshalb darin, die Vorrichtung zum räumlichen Verbinden von Bauteilen der gattungsgemäßen Art so auszubilden, daß sich mit ihr die Teile schnell und exakt ohne Verdrehungsmöglichkeit gegeneinander raumstabil verbinden lassen.

Diese Aufgabe wird ausgehend von der Vorrichtung zum räumlichen Verbinden von Teilen der eingangs genannten Art dadurch gelöst, daß an dem gemeinsamen Rand der beiden Betten jeder Schale eine abgeschrägte Kante und ein Eingriffszahn und dazwischen eine geneigte Öffnung für die Aufnahme wenigstens eines Verbindungselements vorgesehen sind.

Mit der erfindungsgemäßen Vorrichtung ist es möglich, Teile, wie Bauelemente, unterschiedlicher Form schnell und genau unter einem vorgegebenen Winkel so zu verbinden, daß die Stabilität der räumlichen Anordnung der miteinander verbundenen Teile gewährleistet ist.

Zweckmäßigerweise hat jedes Bett wenigstens eine Anpreßfläche, deren Form der des aufzunehmenden und zu haltenden Teiles im Befestigungsbereich entspricht.

Vorzugsweise ist der Eingriffszahn mit dem gemeinsamen Rand der beiden Betten jeder Schale in einem Stück ausgebildet.

Der gemeinsame Rand der beiden Betten jeder Schale einschließlich abgeschrägter Kante, Eingriffszahn und geneigter Öffnung kann auch als selbständiges Element ausgebildet sein.

Ebenso kann der Eingriffszahn als gesondertes Element ausgebildet und am gemeinsamen Rand der beiden Betten jeder Schale befestigt werden.

Vorteilhafterweise besteht der Eingriffszahn aus einer in einem Sitz im gemeinsamen Rand der beiden Betten jeder Schale beweglich gelagerten Kugel.

Die erfindungsgemäße Vorrichtung eignet sich besonders für den Aufbau von Möbeln, Regalen, Gerüsten, zur Halterung von Leuchtkörpern, Dekorationen und Werbematerialien. Der Einsatz der Vorrichtung ist besonders zweckmäßig auf Ausstellungen, wo entsprechende Bauelemente schnell und kurzzeitig montiert und demontiert werden müssen. Je nach Bestimmung und Einsatz werden die Schalen aus Metall oder Kunststoff durch Stanzen, Gießen oder Spritzen angefertigt, wobei die Form der Betten der Form des jeweils zu haltenden Bauelements angepasst ist. Außerdem können außenseitig ästhetische Anforderungen an die Form berücksichtigt werden.

Anhand von Zeichnungen werden Ausführungsbeispiele der Erfindung näher erläutert. Es zeigt:

Fig. 1    axonometrisch eine erste Ausführungsform der Vorrichtung,

Fig. 2    axonometrisch die eine Schale der Vorrichtung von Fig. 1,

Fig. 3    axonometrisch die andere Schale der Vorrichtung von Fig. 1,

Fig. 4    eine Draufsicht auf die Vorrichtung von Fig. 1,

Fig. 5    den Schnitt A-A von Fig. 4,

Fig. 6    den Schnitt B-B von Fig. 4 und

Fig. 7    bis 14 axonometrisch weitere Ausführungsformen der Vorrichtung.

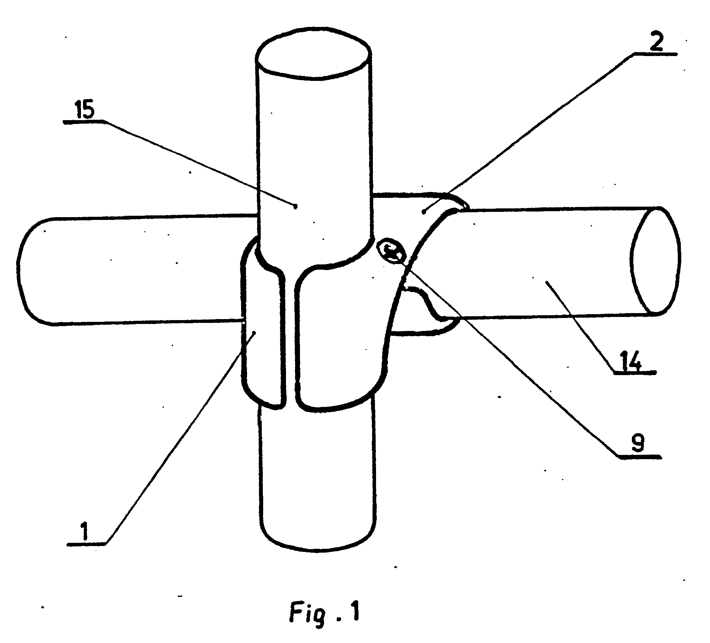

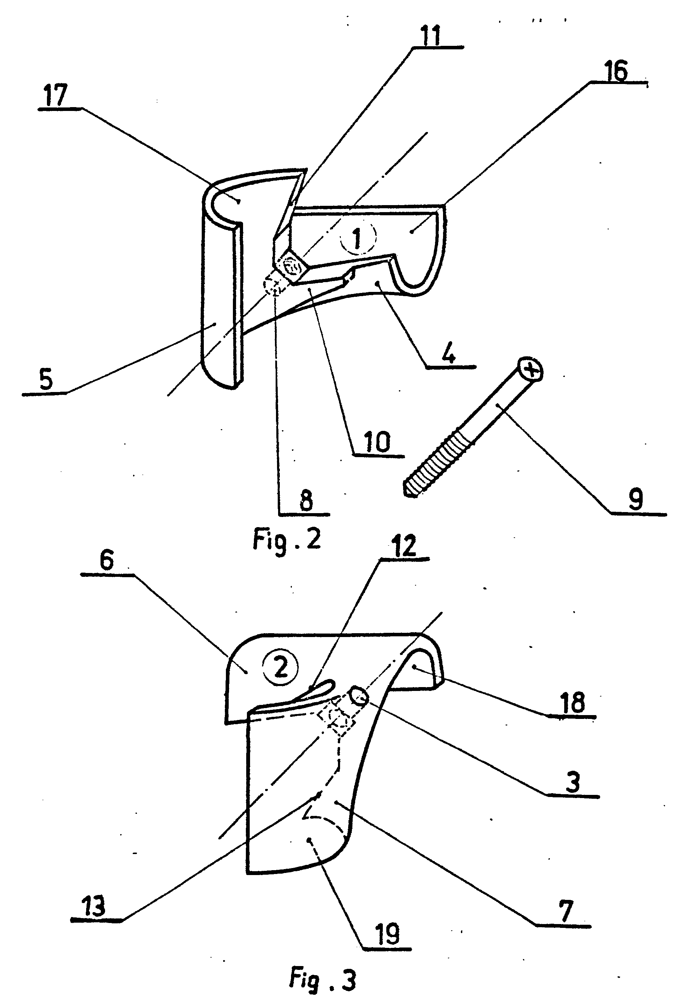

Die in den Fig. 1 bis 6 gezeigte Vorrichtung dient zum räumlichen Verbinden von Teilen 14 und 15, die als zylindrische Stangen dargestellt sind. Die Vorrichtung besteht aus einer ersten Schale 1 und einer zweiten Schale 2. Wie aus Fig. 2 und 3 zu sehen ist, hat die Schale 1 ein erstes Bett 4 und ein zweites Bett 5, die einander unter einem vorgegebenen Winkel räumlich kreuzen und längs eines gemeinsamen Randes miteinander verbunden sind, der eine abgeschrägte Kante 11 und einen Eingriffszahn 10 und dazwischen eine Öffnung 8 in Form einer Gewindebohrung aufweist. Die in Fig. 3 gezeigte zweite Schale 2 hat ein erstes Bett 6 und ein zweites Bett 7, die sich unter dem gleichen Winkel wie die Betten 4 und 5 der ersten Schale 1 räumlich kreuzend angeordnet sind und längs eines gemeinsamen Randes miteinander verbunden sind, der eine Kante 13 und einen Eingriffszahn 12 aufweist, zwischen denen eine schräggeneigte Öffnung 3 in Form einer Bohrung ausgebildet ist.

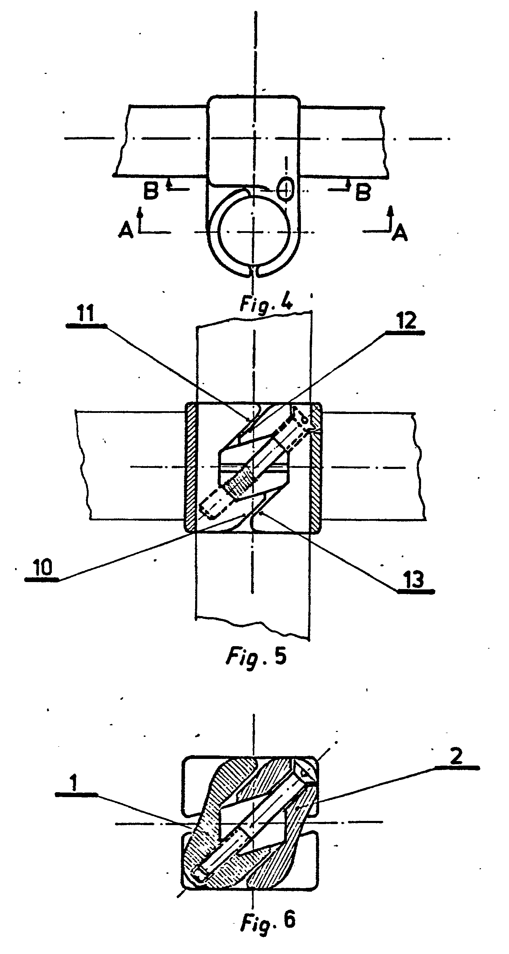

Die Schalen 1 und 2 der Vorrichtung werden zur Halterung der Teile 14 und 15 so angeordnet, wie dies in Fig. 1 bzw. in den Fig. 4 bis 6 gezeigt ist. Dabei sind die Öffnungen 3 und 8 zueinander koaxial ausgerichtet, so daß ein Verbindungselement in Form einer Schraube 9 durch die Öfnung 3 eingeführt und in dem Gewinde in der Öffnung 8 festgeschraubt werden kann, wodurch die Schalen 1 und 2 aneinander befestigt sind und die Teile 14 und 15 klemmend zwischen sich unter dem durch den Kreuzungswinkel der Betten 4 und 5 bzw. 6 und 7 vorgegebenen Winkel halten. Dabei kommt die abgeschrägte Kante 11 der Schale 1 mit dem Eingriffszahn 12 der Schale 2 in Kontakt, während die abgeschrägte Kante 13 der Schale 2 mit dem Eingriffszahn 10 der Schale 1 in Berührung steht.

Bei der Montage werden das Teil 14 in die Betten 4 und 6 und das Teil 15 in die Betten 5 und 7 eingelegt. Beim Festschrauben des Verbindungselements 9 drücken die Betten 4 und 6 gegen das Teil 14 und die Betten 5 und 7 gegen das Teil 15, wobei der Eingriffszahn 12 der Schale 2 an der Kante 11 der Schale 1 und der Eingriffszahn der Schale 1 an der Kante 13 der Schale 2 entlanggleitet und durch diese Verkeilung die drehfeste Verbindung der Teile 14 und 15 zueinander gewährleistet.

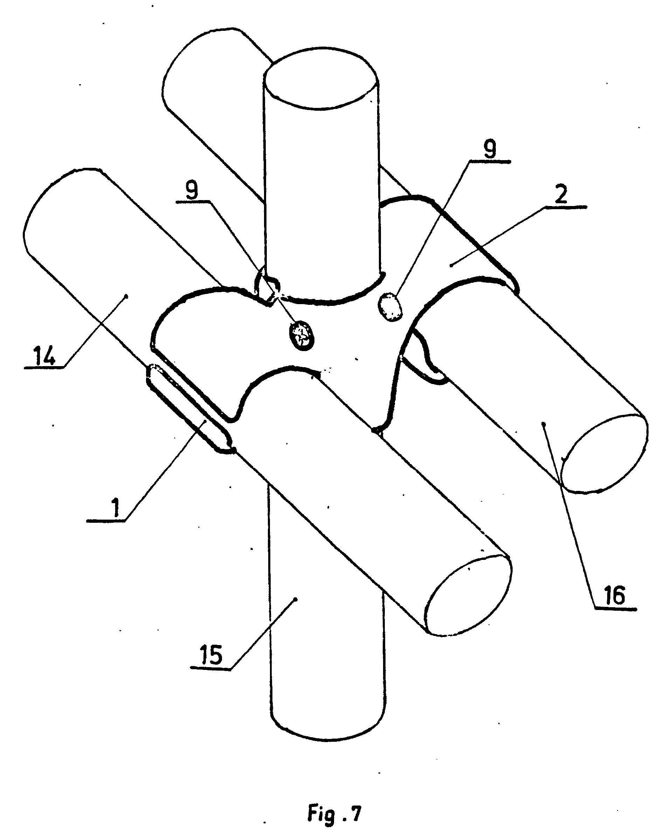

Die in Fig. 7 gezeigte Vorrichtung dient zum Verbinden von drei zylindrischen Teilen 14, 15 und 16, wofür die Schalen 1 und 2 mit drei halbzylindrischen Betten versehen sind, wobei die beiden äußeren Betten zum mittleren Bett jeweils unter einem Winkel von 90° geneigt sind. Dabei sind zwei Verbindungselemente 9 vorgesehen, deren entsprechende Öffnungen in den Schalen 1 und 2 zugeordnet sind.

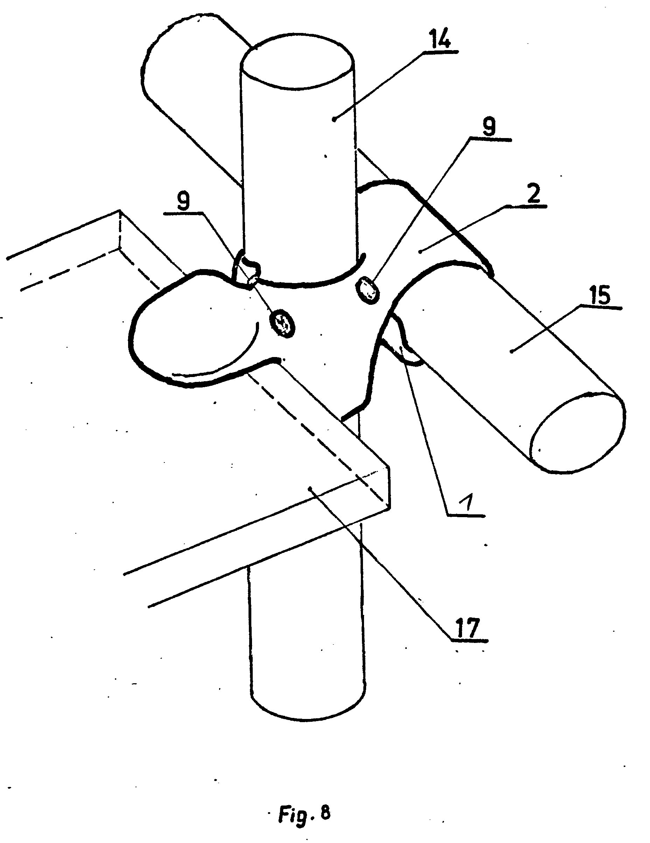

Die Ausführungsform von Fig. 8 ist gegenüber der von Fig. 7 so abgewandelt, daß die Betten der Schalen 1 und 2 auf einer Seite als ebene Flächen ausgebildet sind, so daß zwischen ihnen ein flaches Teil 17 gehalten werden kann.

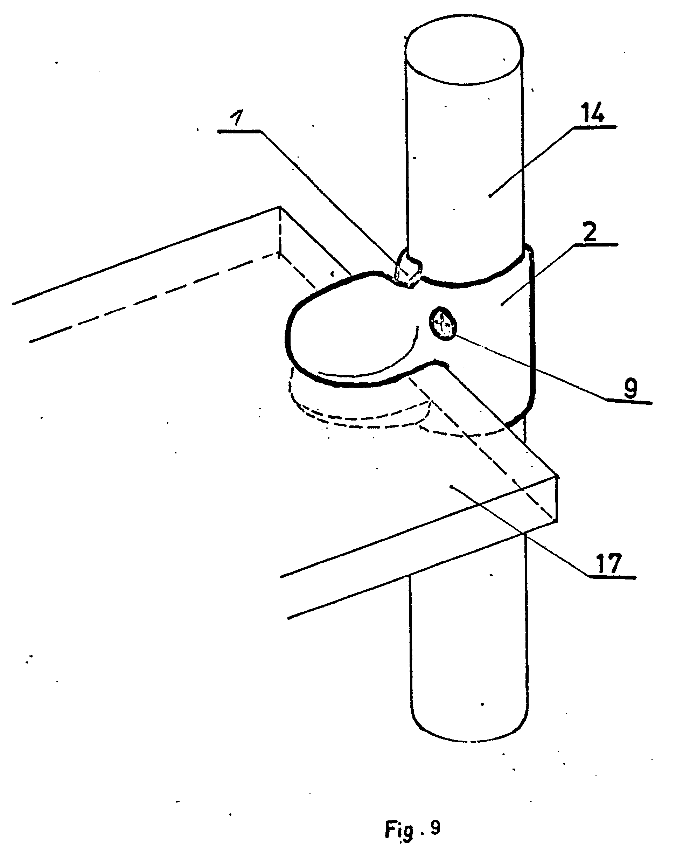

Mit der Vorrichtung von Fig. 9 werden ein zylindrisches Teil 14 und ein flaches Teil 17 rechtwinklig zueinander gehalten, wofür die Schalen 1 und 2 jeweils mit einem halbzylindrischen Bett und einem Bett mit ebener Fläche versehen sind.

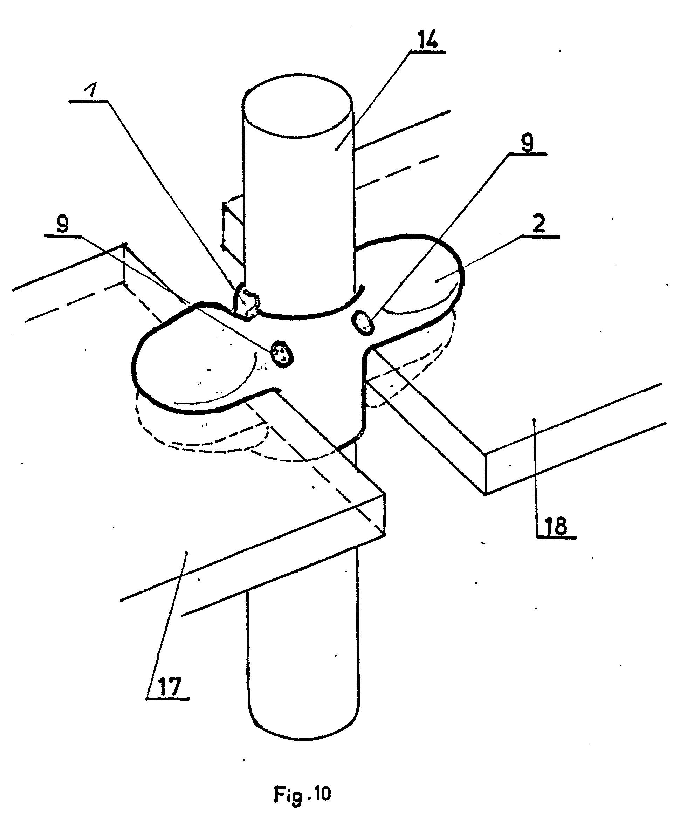

Bei der Ausführungsform von Fig. 10 werden an einem zylindrischen vertikalen Teil 14 zwei horizontale flache Teile 17 und 18 gehalten, wofür die Schalen 1 und 2 mittig jeweils ein halbzylindrisches Bett und auf den beiden Seiten jeweils Betten mit ebenen Halteflächen aufweisen. Wie bei den Ausführungsformen der Fig. 7 und 8 sind auch hier zwei Verbindungselemente 9 mit entsprechenden Öffnungen in den Schalen 1 und 2 vorgesehen.

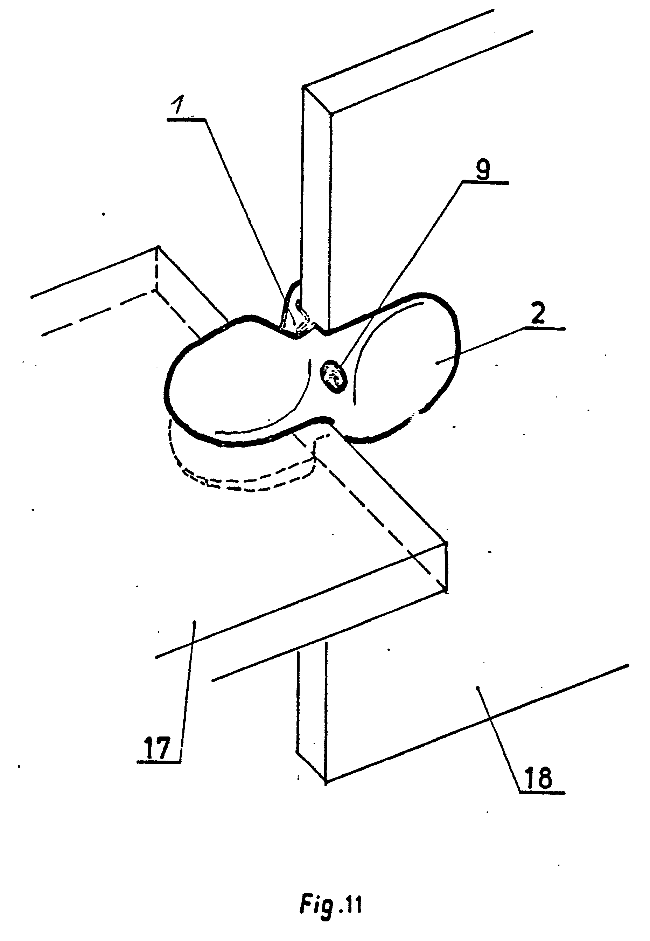

Mit der in Fig. 11 gezeigten Vorrichtung lassen sich zwei plattenförmige Teile 17 und 18 in einer Anordnung senkrecht zueinander befestigen. Die Schalen 1 und 2 sind dabei jeweils mit Betten versehen, die ebene, an den plattenförmigen Teilen 17 und 18 klemmend angreifenden Halteflächen aufweisen.

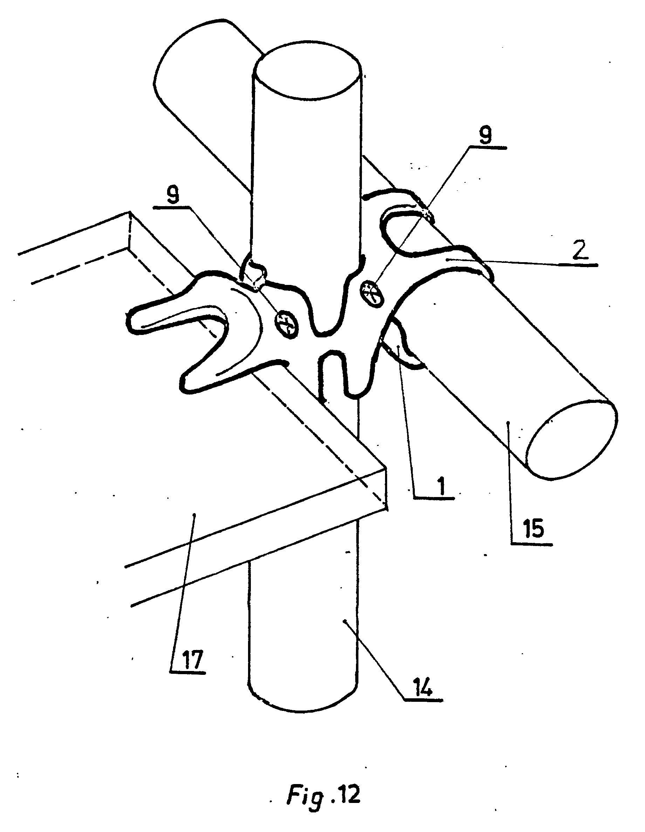

Die Ausführungsform der Vorrichtung von Fig. 12 entspricht im wesentlichen der von Fig. 8, wobei in den Schalen zur Materialsparnis entsprechende Ausschnitte vorgesehen sind, was zwar die Größe der Klemmflächen reduziert, die Haltefunktion jedoch nicht beeinträchtigt.

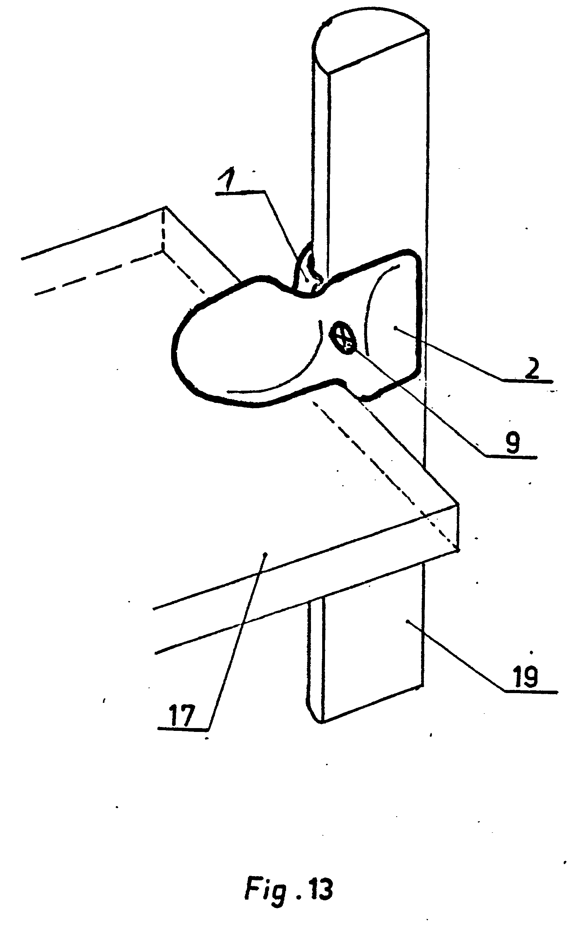

Die Vorrichtung von Fig. 13 dient zum Halten eines halbzylindrischen Teiles 19 an einem flachen Teil 17 vertikal zueinander. Die Halteflächen der Schalen 1 und 2 sind dabei so gestaltet, daß sie an die jeweilige Form der zu haltenden Teile 17 und 19 angepasst sind.

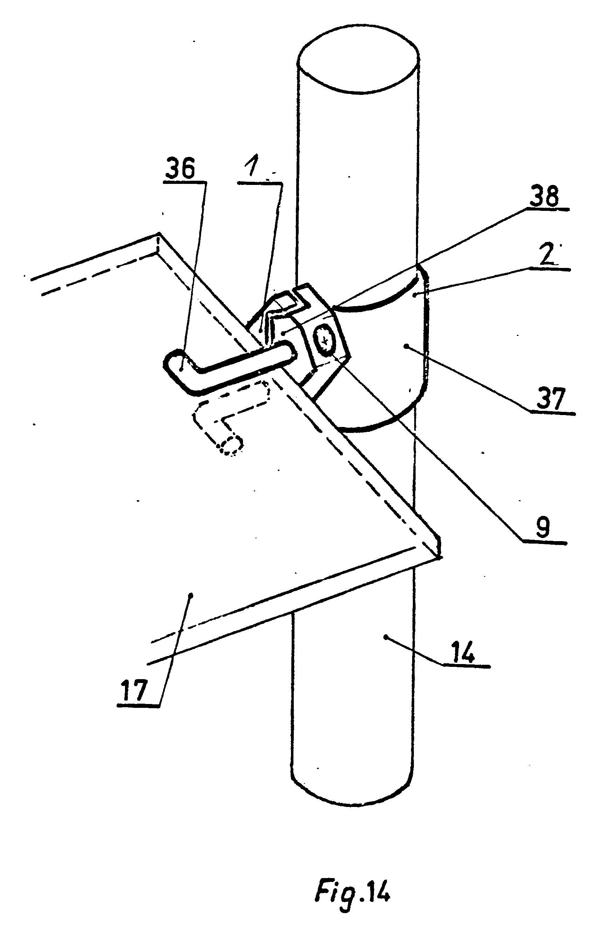

Bei der Ausführungsform der Vorrichtung nach Fig. 14 werden ein zylindrisches Teil 14 und ein flaches Teil 17 in vertikaler Anordnung zueinander verbunden. Die Schalen 1 und 2 sind dabei mit selbständig montierbaren Elementen 36, 37 und 38 versehen. Das Element 38 spielt dabei die Rolle eines gemeinsamen Randes der drükkenden Betten in den Elementen 36 und 37 und ist mit einer Kante und einem Eingriffszahn versehen. Das plattenförmige Teil 17 wird dabei zwischen den rechtwinklig abgebogenen, an den Schalen 1 und 2 gehaltenen Stangen 36 fixiert, während für die Halterung des zylindrischen Teils 14 die Schalen 1 und 2 mit Elementen 37 versehen sind, die jeweils ein halbzylindrisches Bett haben.

## Ansprüche

1. Vorrichtung zum räumlichen Verbinden von Teilen (14 bis 19), insbesondere Bauelementen, mit zwei Schalen (1, 2), von denen jede mit wenigstens zwei Betten (4, 5 bzw. 6, 7) für die Aufnahme und Halterung der Teile (14 bis 19) versehen ist und die durch Verbindungselemente (9) aneinander befestigt sind, wobei die Betten (4, 5 bzw. 6, 7) unter einem Winkel so angeordnet sind, daß sie sich räumlich kreuzen dadurch **gekennzeichnet,** daß an dem gemeinsamen Rand der beiden Betten (4, 5 bzw. 6, 7) jeder Schale (1, 2) eine abgeschrägte Kante (11 bzw. 19) und ein Eingriffszahn (10, 12) und dazwischen eine geneigte Öffnung (8 bzw. 3) für die Aufnahme wenigstens eines Verbindungselements (9) vorgesehen sind.

2. Vorrichtung nach Anspruch 1, dadurch **gekennzeichnet,** daß jedes Bett (4, 5; 6, 7) wenigstens eine Anpreßfläche aufweist, deren Form der des aufzunehmenden und zu haltenden Teils (14 bis 19) im Befestigungsbereich entspricht.

3. Vorrichtung nach Anspruch 1 oder 2, dadurch **gekennzeichnet,** daß der Eingriffszahn (10; 12) mit dem gemeinsamen Rand der beiden Betten (4, 5 bzw. 6, 7) jeder Schale (1, 2) in einem Stück ausgebildet ist.

4. Vorrichtung nach einem der Ansprüche 1 bis 3, dadurch **gekennzeichnet,** daß der gemeinsame Rand der beiden Betten (4, 5 bzw. 6, 7) jeder Schale (1, 2) einschließlich abgeschrägter Kante (11 bzw. 13), Eingriffszahn (10 bzw. 12) und geneigter Öffnung (8 bzw. 3) als selbständiges Element ausgebildet ist.

5. Vorrichtung nach einem der Ansprüche 1 bis 4, dadurch **gekennzeichnet,** daß der Eingriffszahn (10, 12) als gesondertes Element ausgebildet und am gemeinsamen Rand der beiden Betten (4, 5 bzw. 6, 7) jeder Schale (1, 2) befestigt ist.

6. Vorrichtung nach einem der Ansprüche 1 bis 4, dadurch **gekennzeichnet,** daß der Eingriffszahn (10) aus einer in einem Sitz im gemeinsamen Rand der beiden Betten (4, 5 bzw. 6, 7) jeder Schale (1, 2) beweglich gelagerten Kugel besteht.

7. Vorrichtung nach einem der vorhergehenden Ansprüche, dadurch **gekennzeichnet,** daß die beiden Betten jeder Schale (1, 2) rechtwinklig zueinander angeordnet sind.

## Claims

1. Device for connecting in a three dimensional arrangement parts (14 to 19), in particular constructional elements, with two shells ( 1, 2) of which each is provided with at least two seats (4,5 or 6,7) for receiving and holding parts (14 to 19) and which are secured to one another by connecting elements (9), wherein the seats (4,5 or 6,7) are arranged at an angle so that they cross each other in a three dimensional arrangement, characterised in that there are provided at the edge common to the two seats (4,5 or 6,7) of each shell (1,2) a sloping edge (11 to 19) and engaging tooth (10,12) and therebetween there are provided an inclined opening (8 or 3) for the receipt of at least one connecting element (9).

2. Device according to claim 1, **characterised in that** each seat (4,5; 6,7) has at least one pressing surface whose shape corresponds in the securing region to the part (14 to 19) for receiving and holding.

3. Device according to claim 1 or 2, **characterised in that** the engaging tooth (10; 12) is formed in one piece with the common edge of the two seats (4,5 or 6,7) of each shell (1,2).

4. Device according to one of claims 1 to 3, **characterised in that** the common edge of the two seats (4,5 or 6,7) of each shell (1,2) inclusive of sloping edge (11 or 13), engaging tooth (10 or 12) and inclined opening (8 or 3) is formed as an independent element.

5. Device according to one of claims 1 to 4, **characterised in that** the engaging tooth (10,12) is formed as a special element and is secured to the common edge of the two seats (4,5 or 6,7) of each shell (1,2).

6. Device according to one of claims 1 to 4, **characterised in that** the engaging tooth (10) consists of a ball set displaceably at a site in the common edge of the two seats (4,5 or 6,7) of each shell (1,2).

7. Device according to one of the foregoing claims, **characterised in that** the two seats of each shell (1,2) are arranged at right angles to one another.

## Revendications

1. Dispositif de liaison dans l'espace de pièces (14 à 19), notamment d'éléments de construction, comportant deux coquilles (1, 2) qui sont pourvues chacune d'au moins deux parties d'appui (4, 5, respectivement 6, 7) destinées à recevoir et à maintenir les pièces (14 à 19), et qui sont fixées l'une à l'autre par des éléments de liaison (9), les parties d'appui (4, 5, respectivement 6, 7) étant disposées suivant un angle tel qu'elles se croisent dans l'espace, caractérisé en ce qu'il est prévu, au niveau du bord commun des deux parties d'appui (4, 5, respectivement 5, 7) de chaque coquille (1, 2) une arête biseautée (11, respectivement 13) et une dent de contact (10, 12) et, entre les deux, un orifice incliné (8, respectivement 3) destiné à recevoir au moins un élément de liaison (9).

2. Dispositif selon la revendication 1, caractérisé en ce que chaque partie d'appui (4, 5 ; 6, 7) présente au moins une surface de pression dont la forme correspond dans la zone de fixation à celle de la pièce (14 à 19) à recevoir et à maintenir.

3. Dispositif selon la revendication 1 ou 2, caractérisé en ce que la dent de contact (10 ; 12) et le bord commun des deux parties d'appui (4, 5, respectivement 6, 7) de chaque coquille (1, 2) sont formés en une seule pièce.

4. Dispositif selon l'une des revendications 1 à 3, caractérisé en ce que le bord commun des deux parties d'appui (4, 5, respectivement 6, 7) de chaque coquille (1, 2) est formé comme un élément indépendant comprenant l'arête biseautée (11, respectivement 13), la dent de contact (10, respectivement 12) et l'orifice incliné (8, respectivement 3).

5. Dispositif selon l'une des revendications 1 à 4, caractérisé en ce que la dent de contact (10, 12) est formée comme un élément séparé et est fixée au bord commun des deux parties d'appui (4, 5, respectivement 6, 7) de chaque coquille (1, 2).

6. Dispositif selon l'une des revendications 1 à 4, caractérisé en ce que la dent de contact (10) se compose d'une sphère montée mobile dans un logement ménagé dans le bord commun des deux parties d'appui (4, 5, respectivement 6, 7) de chaque coquille (1, 2).

7. Dispositif selon l'une des revendications précédentes, caractérisé en ce que les deux parties d'appui de chaque coquille (1, 2) sont disposées à angle droit l'une par rapport à l'autre.

Fig . 1

Fig . 2

Fig . 3

Fig. 4

Fig. 5

Fig. 6

Fig . 7

Fig. 8

Fig . 9

Fig.10

**Fig. 11**

9

9

2

1

15

17

14

Fig .12

*Fig .13*

Fig.14